# EUROPEAN PATENT SPECIFICATION

(11) **EP 2 197 940 B1**
(45) Date of publication and mention of the grant of the patent: **22.05.2013**
(21) Application number: 08834536.8
(22) Date of filing: 24.09.2008
(51) Int. Cl.: C08G 65/00, C08G 65/34, C08G 65/38, C08G 65/40, C08K 3/00, C08K 3/22, C08K 3/32, C08K 5/521, C08L 71/12

(54) **HIGH CTI POLY(ARYLENE ETHER) COMPOSITION**
POLY(ARYLENETHER)-ZUSAMMENSETZUNG MIT HOHER KRIECHSTROMFESTIGKEIT
COMPOSITIONS DE POLY(ARYLÈNE ÉTHER) À HAUT CTI

(30) Priority: 26.09.2007 US 861805; 01.05.2008 US 113489
(43) Date of publication of application: 23.06.2010
(73) Proprietor: SABIC Innovative Plastics IP B.V., 4612 PX Bergen op Zoom (NL)
(72) Inventor: LANDA, Adrie, NL-4615 DB Bergen Op Zoom (NL)
(74) Representative: Bublak, Wolfgang
(86) International application number: PCT/IB2008/053893
(87) International publication number: WO 2009/040751

(56) References cited:
- EP-A1- 1 070 745
- WO-A1-00/40655
- DATABASE REGISTRY [Online] Chemical Abstracts Service; 16 November 1984 (1984-11-16), "Phosphoric acid, calcium salt (2:3) (CA INDEX NAME)" XP002525778 retrieved from STN Database accession no. RN: 7758-87-4
- DATABASE REGISTRY [Online] Chemical Abstracts Service; 16 November 1984 (1984-11-16), "Hydroxylapatite (Ca5(OH)(PO4)3) (CA INDEX NAME)" XP002525779 retrieved from STN Database accession no. RN: 1306-06-5
- FALBE, REGITZ: "ROEMPP kompakt, Basislexikon Chemie, Band 1" 1998, GEORG THIEME VERLAG , STUTTGART , XP002525825 Calciumphosphate page 319

## Description

### BACKGROUND OF THE INVENTION

Disclosed herein is a poly(arylene ether) composition having a high comparative tracking index (CTI).

Poly(arylene ether)s are commercially attractive materials because of their unique combination of properties, including, for example, high temperature resistance, dimensional and hydrolytic stability, and electrical properties. One such electrical property is the CTI. The CTI value is a measure of the resistance of a material to electrical current. Currently known poly(arylene ether) compositions have a CTI of 200 to 300 volts. However, some applications require a material having a high CTI in addition to the other desirable properties of poly(arylene ether). Accordingly there is a need in the art for a poly(arylene ether) composition having a higher CTI than is currently known.

### BRIEF DESCRIPTION OF THE INVENTION

The needs discussed above have been addressed by a thermoplastic composition comprising:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the composition has a CTI of greater than or equal to 350 volts as determined by IEC60112.

In another embodiment a thermoplastic composition comprises:
60 to 85 weight percent of a poly(arylene ether);
7 to 35 weight percent of a poly(alkenyl aromatic) resin;
   optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and wherein the composition has a CTI of greater than or equal to 240 volts as determined by IEC60112.

In another embodiment a thermoplastic composition comprises:
60 to 90 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
wherein weight percent is based on the total weight of the composition, and
wherein the composition has a CTI of greater than or equal to 240 volts as determined by IEC60112.

Methods for preparing the compositions and articles comprising the compositions are also described.

### DETAILED DESCRIPTION OF THE INVENTION

As mentioned above there is a need for compositions having a high CTI for use in items such as electronic connectors, housings, and mini-circuit boards. A variety of factors can affect the CTI of a material making it difficult to predict the CTI of a particular composition. A partial list of factors that can affect the CTI of a composition includes resin type, flame retardant type and amount, presence of reinforcing filler and type of reinforcing filler, as well as the presence and type of pigment. For example, a "natural" colored resin (unpigmented) can have a CTI that is 10 to 40 volts higher than a comparable black resin. Additionally, the presence of reinforcing fillers, especially inorganic reinforcing fillers, usually lowers the CTI. Until now it was thought that the only poly(arylene ether) compositions capable of achieving a CTI near to 400 volts were light colored or unpigmented and free of reinforcing filler. Disclosed herein is are compositions comprising a poly(arylene ether), poly(alkenyl aromatic) resin, hydroxylapatite, and an organophosphate ester flame retardant.

Surprisingly, the inclusion of hydroxylapatite yielded compositions with markedly higher CTI values than comparable compositions free of hydroxylapatite. One approach to improving CTI in compositions has involved the inclusion of materials having a high dielectric constant. One such example is barium titanate which has a dielectric constant (Dk) of about 1200. In contrast hydroxylapatite has a Dk of about 7.4. Yet, despite the low dielectric constant the inclusion of hydroxylapatite results in a composition having a higher CTI than a comparable composition free of hydroxylapatite.

In the specification and the claims, reference will be made to a number of terms, which shall be defined to have the following meanings. The singular forms "a", "an" and "the" include plural referents unless the context clearly dictates otherwise. "Optional" or "optionally" means that the subsequently described event or circumstance may or may not occur, and that the description includes instances where the event occurs and instances where it does not. Izod values described herein are determined at 23°C.

Poly(arylene ether) comprises repeating structural units of formula (I) 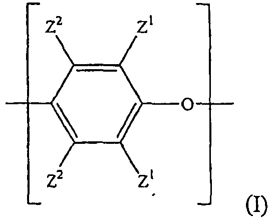 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as "substituted", it can contain heteroatoms over and above the carbon and hydrogen members of the substituent residue. Thus, when specifically described as substituted, the hydrocarbyl residue can also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it can contain heteroatoms within the backbone of the hydrocarbyl residue.

The poly(arylene ether) can comprise molecules having aminoalkyl-containing end group(s), typically located in an ortho position to the hydroxy group. Also frequently present are tetramethyl diphenylquinone (TMDQ) end groups, typically obtained from reaction mixtures in which tetramethyl diphenylquinone byproduct is present.

The poly(arylene ether) can be in the form of a homopolymer; a copolymer; a graft copolymer; an ionomer; or a block copolymer; as well as combinations comprising two or more of the foregoing polymers. Poly(arylene ether) includes polyphenylene ether comprising 2,6-dimethyl-1,4-phenylene ether units optionally in combination with 2,3,6-trimethyl-1,4-phenylene ether units.

The poly(arylene ether) can be prepared by the oxidative coupling of monohydroxyaromatic compound(s) such as 2,6-xylenol and/or 2,3,6-trimethylphenol. Catalyst systems are generally employed for such coupling; they can contain heavy metal compound(s) such as a copper, manganese or cobalt compound, usually in combination with various other materials such as a secondary amine, tertiary amine, halide or combination of two or more of the foregoing.

The poly(arylene ether) can have a number average molecular weight of 3,000 to 40,000 grams per mole (g/mol) and a weight average molecular weight of 5,000 to 80,000 g/mol, as determined by gel permeation chromatography using monodisperse polystyrene standards, a styrene divinyl benzene gel at 40°C and samples having a concentration of 1 milligram per milliliter of chloroform. The poly(arylene ether) or combination of poly(arylene ether)s has an initial intrinsic viscosity of 0.1 to 0.60 deciliters per gram (dl/g), as measured in chloroform at 25°C. Initial intrinsic viscosity is defined as the intrinsic viscosity of the poly(arylene ether) prior to melt mixing with the other components of the composition and final intrinsic viscosity is defined as the intrinsic viscosity of the poly(arylene ether) after melt mixing with the other components of the composition. As understood by one of ordinary skill in the art the viscosity of the poly(arylene ether) may be up to 30% higher after melt mixing. The percentage of increase can be calculated by (final intrinsic viscosity - initial intrinsic viscosity)/initial intrinsic viscosity. Determining an exact ratio, when two initial intrinsic viscosities are used, will depend somewhat on the exact intrinsic viscosities of the poly(arylene ether) used and the ultimate physical properties that are desired.

In embodiments containing reinforcing filler the composition comprises poly(arylene ether) in an amount of 45 to 65 weight percent based on the total weight of the thermoplastic composition. Within this range the amount of poly(arylene ether) can be greater than or equal to 50 weight percent. Also within this range the amount of poly(arylene ether) can be less than or equal to 60 weight percent.

In embodiments free of reinforcing filler the composition can comprise poly(arylene ether) in an amount of 60 to 90 weight percent based on the total weight of the thermoplastic composition. Within this range the amount of poly(arylene ether) can be greater than or equal to 62 weight percent. Also within this range the amount of poly(arylene ether) can be less than or equal to 85 weight percent.

The composition further comprises a poly(alkenyl aromatic) resin. The term "poly(alkenyl aromatic) resin" as used herein includes polymers prepared by methods known in the art including bulk, suspension, and emulsion polymerization, which comprise at least 13% by weight of structural units derived from an alkenyl aromatic monomer of formula II 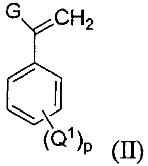 wherein G is hydrogen, C₁-C₈ alkyl, or halogen; Q¹ is vinyl, halogen or C₁-C₈ alkyl; and p is 0 to 5. Exemplary alkenyl aromatic monomers include styrene, chlorostyrene, and vinyltoluene. The poly(alkenyl aromatic) resins include homopolymers of an alkenyl aromatic monomer; random copolymers of two or more alkenyl aromatic monomers; block copolymers comprising poly(alkenyl aromatic) blocks and a polyalkylene block such as polystyrene-poly(ethylene-propylene)-polystyrene and polystyrene-poly(ethylene-butylene)-polystyrene; block copolymers comprising poly(alkenyl aromatic) blocks and a block comprising repeating units derived from a C₄₋₁₀ nonaromatic diene such as polystyrene-polybutadiene-polystyrene and polystyrene-polyisoprene-polystyrene; and rubber-modified poly(alkenyl aromatic) resins comprising blends and/or grafts of a rubber modifier and a homopolymer of an alkenyl aromatic monomer (as described above). The rubber modifier may be a polymerization product of at least one C₄-C₁₀ nonaromatic diene monomer, such as butadiene or isoprene. The rubber-modified poly(alkenyl aromatic) resin can comprise 98 to 70 weight percent of the homopolymer of an alkenyl aromatic monomer and 2 to 30 weight percent of the rubber modifier, or, more specifically, 88 to 94 weight percent of the homopolymer of an alkenyl aromatic monomer and 6 to 12 weight percent of the rubber modifier.

The stereoregularity of the poly(alkenyl aromatic) resin may be atactic or syndiotactic. Exemplary poly(alkenyl aromatic) resins include atactic and syndiotactic homopolystyrenes. Suitable atactic homopolystyrenes are commercially available as, for example, EB3300 from Chevron, and P1800 from BASF. Syndiotactic homopolystyrenes are commercially available. As mentioned above poly(alkenyl aromatic) resins further include the rubber-modified polystyrenes, also known as high-impact polystyrenes or HIPS, comprising 88 to 94 weight percent polystyrene and 6 to 12 weight percent polybutadiene. These rubber-modified polystyrenes are commercially available as, for example, Empera 641F from Nova Innovene, L3190 from SABIC Innovative Plastics, and Nova FX510 from Nova Chemicals.

Poly(alkenyl aromatic) resins also include block copolymers comprising poly(alkenyl aromatic) blocks. These block copolymers are commercially available as KRATON G and KRATON D copolymers from KRATON Polymers, K resins from Finaclear, and TUFTEC from Asahi.

In some embodiments the poly(alkenyl aromatic) resin comprises a homopolymer of an alkenyl aromatic monomer and a block copolymer comprising poly(alkenyl aromatic) block.

In some embodiments the composition comprises a block copolymer comprising poly(alkenyl aromatic) block and is free of any other type of poly(alkenyl aromatic) resin.

In embodiments containing reinforcing filler the composition can comprise poly(alkenyl aromatic) resin in an amount of 10 to 30 weight percent based on the total weight of the thermoplastic composition. Within this range the amount of poly(alkenyl aromatic) resin can be greater than or equal to 15 weight percent. Also within this range the amount of poly(alkenyl aromatic) resin can be less than or equal to 25 weight percent.

In some embodiments free of reinforcing filler the composition can comprise poly(alkenyl aromatic) resin in an amount of 7 to 35 weight percent based on the total weight of the thermoplastic composition. Within this range the amount of poly(alkenyl aromatic) resin can be greater than or equal to 10 weight percent. Also within this range the amount of poly(alkenyl aromatic) resin can be less than or equal to 30 weight percent.

In some embodiments free of reinforcing filler the composition can comprise a block copolymer in an amount of 1 to 10 weight percent based on the total weight of the thermoplastic composition. Within this range the amount of block copolymer can be greater than or equal to 2 weight percent. Also within this range the amount of block copolymer can be less than or equal to 9 weight percent.

In some embodiments free of reinforcing filler the composition can comprise a block copolymer in an amount of 1 to 10 weight percent and 1 to 5 weight percent of a poly(alkenyl aromatic) resin (that is not a block copolymer) based on the total weight of the thermoplastic composition. Within this range the amount of block copolymer can be greater than or equal to 2 weight percent. Also within this range the amount of block copolymer can be less than or equal to 9 weight percent.

Hydroxylapatite CAS No. 1306-06-5) has the chemical formula Ca₅(OH)(PO₄)₃. It is also known as hydroxyapatite, tricalcium phosphate, tribasic calcium phosphate, pentacalciumhydroxyorthophosphate, and apatite. In some embodiments the hydroxylapatite has an average particle size of 1 to 10 micrometers. Within this range the average particle size can be greater than or equal to 2 micrometers. Also within this range the average particle size can be less than or equal to 8 micrometers.

The compositions comprise hydroxylapatite in an amount of 1 to 8 weight percent based on the total weight of the composition. Within this range the amount of hydroxylapatite can be greater than or equal to 2 weight percent. Also within this range the amount of hydroxylapatite can be less than or equal to 8 weight percent.

In embodiments comprising a reinforcing filler the composition further comprises titanium dioxide (TiO₂). The titanium dioxide can have an average particle size of 0.1 to 0.5 micrometers, or, more specifically 0.2 to 0.4 micrometers. The titanium dioxide is present in an amount of 3 to 10 weight percent, based on the total weight of the composition. Within this range the amount of titanium dioxide can be greater than or equal to 4 weight percent. Also within this range the amount of titanium dioxide can be less than or equal to 9 weight percent.

The organophosphate ester flame retardant can comprise a compound of formula (III): 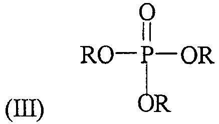 where R is the same or different and is a C₁-C₈ alkyl, C₄-C₂₀ cycloalkyl, C₅-C₂₀ aryl, C₇-C₂₀ alkyl substituted aryl, halogen substituted C₅-C₂₀ aryl, C₅-C₂₀ aryl substituted alkyl, halogen, or a combination of any of the foregoing, provided at least one R is aryl.

Examples include phenyl bisdodecyl phosphate, phenylbisneopentyl phosphate, phenyl-bis (3,5,5'-tri-methyl-hexyl phosphate), ethyldiphenyl phosphate, 2-ethyl-hexyldi(p-tolyl) phosphate, bis-(2-ethylhexyl) p-tolylphosphate, tritolyl phosphate, bis-(2-ethylhexyl) phenyl phosphate, tri-(nonylphenyl) phosphate, di-(dodecyl) p-tolyl phosphate, tricresyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, and the like. In some embodiments each R is aryl. In some embodiments the organophosphate ester flame retardant is a triphenyl phosphate, which may be either unsubstituted or substituted, for example, tris(isopropylphenyl) phosphate (for example, CAS No. 68937-41-7).

Alternatively, the organophosphate ester flame retardant can comprise a di- or polyfunctional compound or polymer having any one of formulas IV, V, or VI: 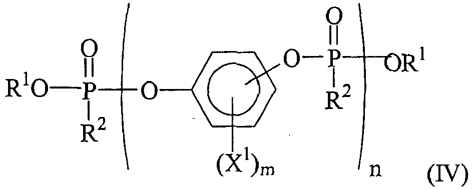 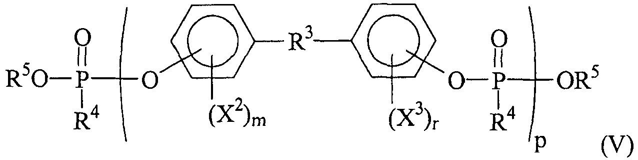 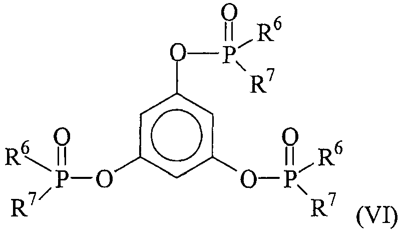 including mixtures thereof, in which R¹, R³ and R⁵ are, independently, hydrocarbon; R², R⁴, R⁶ and R⁷ are, independently, hydrocarbon or hydrocarbonoxy; X¹, X² and X³ are halogen; m and r are 0 or integers from 1 to 4, and n and p are from 1 to 30.

Methods for the preparation of the aforementioned di- and polyfunctional aromatic phosphates are described in British Patent No. 2,043,083.

In one embodiment the organophosphate ester comprises a bis-aryl phosphate of formula VII: 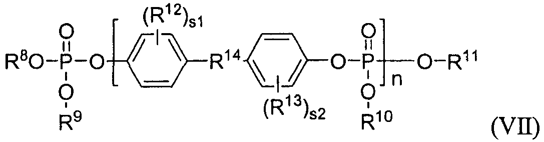 wherein R¹², R¹³ and R¹⁴ are independently at each occurrence an alkyl group having 1 to 5 carbons and R⁸ - R¹¹ are independently an alkyl, aryl, arylalkyl or alkylaryl group having 1 to 10 carbons; n is an integer equal to 1 to 25; and s1 and s2 are independently an integer equal to 0 to 2. In some embodiments OR⁸, OR⁹, OR¹⁰ and OR¹¹ are independently derived from phenol, a monoalkylphenol, a dialkylphenol, or a trialkylphenol.

As readily appreciated by one of ordinary skill in the art, the bis-aryl phosphate is derived from a bisphenol. Exemplary bisphenols include 2,2-bis(4-hydroxyphenyl)propane (so-called bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In one embodiment, the bisphenol comprises bisphenol A.

In some embodiments the organophosphate ester is selected from the group consisting of resorcinol bis-diphenylphosphate (for example, CAS No. 57583-54-7), bis-phenol A bis-diphenylphosphate (for example, CAS No. 181028-79-5), their polymeric counterparts, and combinations comprising two or more of the foregoing.

The compositions can comprise organophosphate flame retardant in an amount sufficient to achieve a V1 or better rating as determined by UL94 at a thickness of 1.6 millimeters.

In embodiments containing reinforcing filler the composition can comprise the organophosphate ester flame retardant in an amount of 3 to 15 weight percent based on the total weight of the thermoplastic composition. Within this range the amount of organophosphate ester flame retardant can be greater than or equal to 4 weight percent. Also within this range the amount of organophosphate ester flame retardant can be less than or equal to 13 weight percent.

In some embodiments free of reinforcing filler the composition can comprise organophosphate ester flame retardant in an amount of 5 to 15 weight percent based on the total weight of the thermoplastic composition. Within this range the amount of organophosphate ester flame retardant can be greater than or equal to 6 weight percent. Also within this range the amount of organophosphate ester flame retardant can be less than or equal to 13 weight percent.

In some embodiments free of reinforcing filler the composition can comprise organophosphate ester flame retardant in an amount of 5 to 20 weight percent based on the total weight of the thermoplastic composition. Within this range the amount of organophosphate ester flame retardant can be greater than or equal to 10 weight percent. Also within this range the amount of organophosphate ester flame retardant can be less than or equal to 15 weight percent.

In some embodiments the composition further comprises a reinforcing filler. The reinforcing filler is an inorganic filler that can be fibrous, particulate, or plate like. Examples of reinforcing fillers include glass fiber, glass spheres, flaked glass, talc, mica, and combinations comprising at least one of the foregoing fillers. Talc includes including fibrous, modular, needle shaped, and lamellar talcs; glass spheres include both hollow and solid, and surface-treated glass spheres; mica includes mica surface treated with aminosilanes or acryloylsilanes coatings to impart good physicals to compounded blends; glass fibers include E, A, C, ECR, R, S, D, and NE glasses, and the glass fibers may be coated (sized).

The reinforcing filler can be present in an amount of 3 to 15 weight percent based on the total weight of the composition. Within this range the amount of reinforcing filler can be greater than or equal to 4 weight percent. Also within this range the amount of reinforcing filler can be less than or equal to 13 weight percent.

In some embodiments the composition further comprises a black coloration component. The black coloration component can comprise a pigment, a dye, or a combination thereof. In some embodiments the black coloration component comprises a combination of dyes. In some embodiments the composition comprises a single pigment or a combination of pigments. Exemplary pigments include Pigment black 7, metal oxide black pigments such as iron oxide, mica/iron oxide and the like. Exemplary dyes include a combination of orange and blue dyes, a combination of red and green dyes, and a combination of violet and yellow dyes.

The total amount of coloration component in the composition can be 0.5 to 2 weight percent, based on the total weight of the composition. Within this range the total amount of coloration component can be greater than or equal to 0.75 weight percent. Also within this range the total amount of coloration component can be less than or equal to 1.5 weight percent.

As mentioned above compositions comprising a reinforcing filler have a CTI greater than or equal to 350 volts, or, more specifically, greater than or equal to 400 volts as determined by IEC60112. The CTI can be less than or equal to 800 volts. Additionally the reinforced composition can have an unnotched Izod of 15 to 30 kilojoules per square meter (kJ/m²) as determined according to ISO 180/1A at 23°C. Within this range the unnotched Izod can be greater than or equal to 17 kJ/m². Also within this range the unnotched Izod can be less than or equal to 25 kJ/m². Additionally, the composition can have a Vicat B 120 value of 145°C to 165°C. Within this range the Vicat B 120 value can be greater than or equal to 150°C.

Compositions comprising a black coloration component have a CTI greater than or equal to 240 volts, or, more specifically, greater than or equal to 250 volts. The CTI can be less than or equal to 600 volts. Additionally, these compositions have a flame retardance of V1 or better according to UL94 at 1.6 millimeters thickness.

Compositions free of reinforcing filler can have a CTI greater than or equal to 240 volts, or, more specifically, greater than or equal to 250 volts. The CTI can be less than or equal to 600 volts. Additionally, these compositions can have a flame retardance of V1 or better according to UL94 at 1.6 millimeters thickness.

The compositions may also comprise additives known in the art. Possible include anti-oxidants, stabilizers, drip retardants, crystallization nucleators, metal salts, antistatic agents, plasticizers, lubricants, mold release agents, and combinations comprising two or more of the foregoing additives. These additives are known in the art, as are their effective levels and methods of incorporation. Effective amounts of the additives vary widely, but they are usually present in an amount of less than or equal to 50 weight percent, based on the total weight of the composition. Amounts of these additives are generally 0.25 weight percent to 2 weight percent, based upon the total weight of the composition. The effective amount can be determined by those skilled in the art without undue experimentation.

In some embodiments the composition further comprises 0.5 to 5 weight percent of a polyolefin, based on the total weight of the composition. Exemplary polyolefins include LLDPE and LDPE.

Embodiments that do not explicitly include a reinforcing filler can, in some cases, be free of glass fiber.

The composition can be prepared using various techniques, including batch or continuous techniques that employ kneaders, extruders, mixers, and the like. For example, the composition can be formed as a melt blend employing a twin-screw extruder. The components of the composition can be added sequentially, concurrently, or a combination thereof. A masterbatch or masterblend may also be used to facilitate the addition and dispersion of some materials. A vacuum system may be applied to the extruder.

In some embodiments the block copolymer and a portion of the poly(arylene ether) are combined to form a masterbatch which is then used in forming the composition. The block copolymer masterbatch may comprise 50 to 95 weight percent block copolymer and 5 to 50 weight percent poly(arylene ether) based on the combined weight of the block copolymer and poly(arylene ether) in the masterbatch.

In some embodiments a thermoplastic composition comprises:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the composition has a CTI of 350 to 800 volts as determined by IEC60112. Within this range the CTI can be greater than or equal to 375 volts, or, more specifically greater than or equal to 400 volts. Also within this range the CTI can be less than or equal to 750 volts.

In some embodiments a thermoplastic composition comprises:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and
wherein the composition has a CTI of 240 to 600 volts as determined by IEC60112. Within this range the CTI can be greater than or equal to 250 volts, or, more specifically greater than or equal to 275 volts. Also within this range the CTI can be less than or equal to 550 volts. Optionally this composition can be free of glass fiber.

In some embodiments a thermoplastic composition comprises:
60 to 90 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
wherein weight percent is based on the total weight of the composition, and
wherein the composition has a CTI of 240 to 600 volts as determined by IEC60112. Within this range the CTI can be greater than or equal to 250 volts, or, more specifically greater than or equal to 275 volts. Also within this range the CTI can be less than or equal to 550 volts. Optionally this composition can be free of glass fiber.

In some embodiments a thermoplastic composition consists essentially of:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the composition has a CTI of greater than or equal to 350 volts as determined by IEC60112. "Consists essentially of" as used herein allows for the inclusion of additional components which do not materially affect the CTI of the composition.

In some embodiment a thermoplastic composition consists essentially of:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
   wherein weight percent is based on the total weight of the composition, and
   wherein the composition has a CTI of greater than or equal to 240 volts as determined by IEC60112. Optionally this composition can be free of glass fiber.

In some embodiments a thermoplastic composition consists essentially of:
60 to 90 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
wherein weight percent is based on the total weight of the composition, and
wherein the composition has a CTI of greater than or equal to 240 volts as determined by IEC60112. Optionally this composition can be free of glass fiber.

In some embodiments a thermoplastic composition consists of:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the composition has a CTI of greater than or equal to 350 volts as determined by IEC60112.

In some embodiment a thermoplastic composition consists of:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and
wherein the composition has a CTI of greater than or equal to 240 volts as determined by IEC60112.

In some embodiments a thermoplastic composition consists of:
60 to 90 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
   wherein weight percent is based on the total weight of the composition, and
   wherein the composition has a CTI of greater than or equal to 240 volts as determined by IEC60112.

In some embodiments, an article comprises a thermoplastic composition, wherein the thermoplastic composition comprises:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the article has a CTI of greater than or equal to 350 volts as determined by IEC60112.

In some embodiments, an article comprises a thermoplastic composition, wherein the thermoplastic composition comprises:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and
wherein the article has a CTI of greater than or equal to 240 volts as determined by IEC60112. Optionally the composition can be free of glass fiber.

In some embodiments, an article comprises a thermoplastic composition, wherein the thermoplastic composition comprises:
60 to 85 weight percent of a poly(arylene ether);
1 to 10 weight percent of a block copolymer;
optionally 0.5 to 2 weight percent of a black coloration component;
1 to 8 weight percent of hydroxylapatite; and
10 to 20 weight percent of organophosphate ester flame retardant,
wherein weight percent is based on the total weight of the composition, and
wherein the composition has a CTI of greater than or equal to 240 volts as determined by IEC60112. Optionally the composition can be free of glass fiber.

In some embodiments, an article comprises a thermoplastic composition, wherein the thermoplastic composition consists essentially of:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the article has a CTI of greater than or equal to 350 volts as determined by IEC60112.

In some embodiments, an article comprises a thermoplastic composition, wherein the thermoplastic composition consists essentially of:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and
wherein the article has a CTI of greater than or equal to 240 volts as determined by IEC60112. Optionally the composition can be free of glass fiber.

In some embodiments, an article comprises a thermoplastic composition, wherein the thermoplastic composition consists essentially of:
60 to 90 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
wherein weight percent is based on the total weight of the composition, and
wherein the composition has a CTI of greater than or equal to 240 volts as determined by IEC60112. Optionally the composition can be free of glass fiber.

In some embodiments, an article comprises a thermoplastic composition, wherein the thermoplastic composition consists of:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
3 to 10 weight percent titanium dioxide; and
3 to 15 weight percent of a reinforcing filler,
wherein weight percent is based on the total weight of the composition, and
wherein the article has a CTI of greater than or equal to 350 volts as determined by IEC60112.

In some embodiments, an article comprises a thermoplastic composition, wherein the thermoplastic composition consists of:
60 to 85 weight percent of a poly(arylene ether);
7 to 35 weight percent of a poly(alkenyl aromatic) resin;
optionally 0.5 to 2 weight percent of a black coloration component;
1 to 8 weight percent of hydroxylapatite; and
5 to 15 weight percent of organophosphate ester flame retardant,
wherein weight percent is based on the total weight of the composition, and
wherein the article has a CTI of greater than or equal to 240 volts as determined by IEC60112.

In some embodiments, an article comprises a thermoplastic composition, wherein the thermoplastic composition consists:
60 to 85 weight percent of a poly(arylene ether);
1 to 10 weight percent of a block copolymer;
optionally 0.5 to 2 weight percent of a black coloration component;
1 to 8 weight percent of hydroxylapatite; and
5 to 20 weight percent of organophosphate ester flame retardant,
wherein weight percent is based on the total weight of the composition, and
wherein the composition has a CTI of greater than or equal to 240 volts as determined by IEC60112.

Without further elaboration, it is believed that one skilled in the art can, using the description herein, make and utilize the composition to its fullest extent. The following examples are included to provide additional guidance to those skilled in the art in practicing the claimed composition. The examples provided are merely representative of the work that contributes to the teaching of the composition. Accordingly, these examples are not intended to limit the invention, as defined in the appended claims, in any manner.

### EXAMPLES

Compositions described herein were extruded on a ZSK 28 millimeter (mm) co-rotating intermeshing twin-screw extruder. The components of the compositions and their source are listed in Table 1. All ingredients except the HIPS, BPADP and glass fiber were dry blended then added to the feedthroat of the extruder. The HIPS was added at the feedthroat using a separate feeder. The BPADP, when used, was added using a downstream liquid injection system. The glass fiber was added using a downstream feeder. The extruder was set with barrel temperatures of 280°C to 300°C. The material was run at 10 to 15 kilograms per hour (kg/hr) with the screw rotating at 300 rotations per minute (rpm) with a vacuum of 600 millibar (mbar) to 800 mbar applied to the melt during compounding. The torque was maintained at 70 to 80%. In examples containing a block copolymer the block copolymer added as part of a masterbatch. The masterbatch comprised poly(arylene ether) and the block copolymer. Amounts of the block copolymer shown in the table below are of the block copolymer (not the amount of masterbatch).

The extruded pellets were dried at 100°C for 2 hours and molded into samples for testing. All samples were molded via injection molding with the molding machine set at 290 to 320°C and mold set at 120°C, and tested for unnotched Izod impact strength (in units of kJ/m²) according to ISO 180/1A at 23°C. The tensile modulus (in units of megaPascals (MPa)), tensile stress at break and tensile strain at break were tested according to ISO 527. Tensile modulus and tensile stress at break are reported in MegaPascals (MPa). Tensile strain at break is reported in percent (%). Heat resistance (Vicat B) was measured according to ISO 306 at 50 Newtons and 120°C per minute and is reported in °C.

The CTI was tested according to IEC60112 and is reported in volts. Testing according to IEC60112 was performed on clean samples that were free of dust and grease. The samples were at least 2 centimeters (cm) by 2 cm with a thickness of at least 3 mm. The electrolyte solution was a 0.1 weight solution of anhydrous ammonium chloride in water, with a conductivity less than or equal to 1 milliSiemens per meter (mS/m). The electrodes were clean and free from char prior to testing each sample. The electrodes were positioned to face each other and form a 60 degree angle with the sample. The distance between the electrodes was 4 mm. The electrical current was 1.0 amps (+/- 0.1 amps) at the voltage being measured. For example: when the CTI is measured at 400V then the electrode current is calibrated at 1.0 amps.

Flame retardance was tested according to UL94 using samples having a thickness of 1.6 millimeters.

The component amounts of each of the compositions are shown in Tables 2-3, along with physical properties of molded test parts. The amount of each component is expressed in weight percent based on the total weight of the composition.

**Table 1.**

| Component | Trade name and Supplier |
|---|---|
| PPE I | A poly(2,6-dimethyl-1,4-phenylene ether) having intrinsic viscosity of 0.41 dl/g available from GE Plastics. |
| PPE II | A poly(2,6-dimethyl-1,4-phenylene ether) having intrinsic viscosity of 0.46 dl/g available from GE Plastics. |
| (Tricalcium phosphate) Hydroxylapatite | CAS No. 1306-06-5, commercially available from Budenheim CFB under the product name C13-09. |
| HIPS | High impact polystyrene commercially available from Nova Innovene. |
| SEBS | A polystyrene-poly(ethylene-butylene)-polystyrene block copolymer commercially available fromKRATON Polymers as KRATON-G 1651E. |
| Glass fiber | An E glass fiber having an average strand length of 3 mm and an average filament diameter of 14 microns commercially available from Nippon Electric Glass. |
| BPADP | bis-phenol A bis-diphenylphosphate, CAS No. 181028-79-5, commercially available from Albemarle. |
| Pigment black 7 | A carbon black pigment commercially available from Degussa AG. |
| TiO₂ | Titanium dioxide having a an average particle size of 0.18-0.28 micrometers and commercially available from Kronos. |

### EXAMPLES 1-2 and COMPARATIVE EXAMPLES 1-8

The compositions and physical properties of Examples 1-2 and Comparative Examples (CE) 1-8 are shown below in Table 2. The Examples and the Comparative Examples contained 1.3 to 1.4 weight percent of polyethylene (milled to an average particle size of 1000 micrometers) as a mold release agent and 0.5 weight percent of stabilizers. The Examples and Comparative Examples 1, 2 and 5 contained 0.3 weight percent of pigment. The pigment was a combination of Pigment red 101, Pigment green 17 and Pigment blue 29. Comparative Examples 4 and 6 contained 1.5 weight percent of Pigment black 7. Comparative Example 7 contained neither glass filler, dye, nor pigment. In all Examples hereinafter the hydroxylapatite is referred to as tricalcium phosphate.

**Table 2.**

| | Ex 1 | Ex 2 | CE 1 | CE 2 | CE 3 | CE 4 | CE 5 | CE 6 | CE 7 | CE 8 |
|---|---|---|---|---|---|---|---|---|---|---|
| PPE I | 57.3 | 52.3 | 66.0 | 59.7 | 64.0 | 59.0 | 59.0 | 55.4 | 53.0 | 67.0 |
| Tricalcium phosphate | 3.5 | 3.5 | - | - | - | - | - | - | - | - |
| TiO₂ | 8.8 | 8.8 | - | 6.5 | - | - | - | 6.6 | - | - |
| HIPS | 16.8 | 21.8 | 19.5 | 16.3 | 17.5 | 12.0 | 12.0 | 11.3 | 10.8 | 18.7 |
| Glass fiber | 6.0 | 6.0 | 6.0 | 9.3 | 10.0 | 20.0 | 20.0 | 18.8 | 28.7 | - |
| BPADP | 5.7 | 5.7 | 6.5 | 6.1 | 6.5 | 7.0 | 7.0 | 6.6 | 6.3 | 12.8 |
| MVR | 16.1 | 19.7 | 18.7 | 14.3 | - | - | - | - | - | - |
| Vicat B 120 (°C) | 155 | 149 | 154 | 156 | - | - | - | - | - | - |
| Unnotched Izod | 21 | 19 | NA | 23 | - | - | - | - | - | - |
| Tensile modulus | 3533 | 3518 | 3472A | 3857 | - | - | - | - | - | - |
| Tensile stress at break | 74 | 71 | 72 | 77 | - | - | - | - | - | - |
| Tensile strain at break | 3.7 | 3.7 | 3.6 | 3.5 | - | - | - | - | - | - |
| UL rating | V1 | V1 | V1 | V1 | - | - | - | - | - | - |
| CTI | 400 | 400 | 225 | 300 | 175 | 175 | 175 | 250 | 175 | 225 |

| | | | | | | | | | | |
|---|---|---|---|---|---|---|---|---|---|---|
| NA-not available | | | | | | | | | | |

Examples 1-2 and Comparative Examples 1, 2, and 6 show the effect of tricalcium phosphate on CTI. By including only 3.5 weight percent of tricalcium phosphate the CTI increased by at least 33% while maintaining the other physical properties. Comparative Examples 3-5, 7, and 8 generally demonstrate the effect of different levels of glass on the CTI of the compositon.

### EXAMPLES 3-5 and COMPARATIVE EXAMPLES 8-9

Examples 3-4 and Comparative Examples 8-9 show the effect of tricalcium phosphate in compositions comprising pigment black. Each example contained 1.2 to 1.3 weight percent of low linear density polyethylene as a mold release agent and 0.3 weight percent of stabilizers. Example 5 contained a combination of Solvent red 135 and Solvent green 3 to make a black composition. The combined amount of dyes was 0.5 weight percent. Compositions and physical properties are shown in Table 3.

**Table 3.**

| | Ex 3 | Ex 4 | Ex. 5 | CE 8 | CE 9 |
|---|---|---|---|---|---|
| PPE II | 64.9 | 63.7 | 62.8 | 66.9 | 66.2 |
| Tricalcium phosphate | 1.9 | 3.8 | 6.0 | 0 | 0 |
| HIPS | 18.1 | 17.8 | 17.5 | 18.7 | 18.5 |
| BPADP | 12.4 | 12.1 | 12.0 | 12.8 | 12.7 |
| Pigment black 7 | 1.0 | 1.0 | - | 0 | 1.0 |
| Vicat B/120 (°C) | 140 | 140 | 140 | 139 | 140 |
| Tensile modulus | 2692 | 2753 | 2794 | 2647 | 2649 |
| Tensile stress at break | 64 | 69 | 61 | 61 | 66 |
| Tensile strain at break | 4.8 | 4.4 | 4.4 | 4.9 | 4.8 |
| UL rating | V0 | V0 | V0 | V0 | V0 |
| CTI | 250 | 275 | 275 | 225 | 200 |

Comparative Example 9, when compared to Comparative Example 8, shows that the inclusion of pigment black decreases the CTI. Examples 3 and 4 show that when tricalcium phosphate is included in the composition the CTI increases over 25 percent.

### EXAMPLES 6-10 and COMPARATIVE EXAMPLE 10

Examples 6-10 and Comparative Example 10 show the effect of tricalcium phosphate in compositions without pigment black or reinforcing filler. Each example contained 1.2 to 1.3 weight percent of low linear density polyethylene as a mold release agent and 0.3 weight percent of stabilizers. Compositions and physical properties are shown in Table 4. Flame testing for these examples was performed at 0.8 millimeter thickness.

**Table 4.**

| | CE 10 | 6 | 7 | 8 | 9 | 10 |
|---|---|---|---|---|---|---|
| PPE I | 79.4 | 78.4 | 77.4 | 76.4 | 75.4 | 79.4 |
| Tricalcium phosphate | - | 1 | 2 | 3 | 4 | 2 |
| SEBS | 4 | 4 | 4 | 4 | 4 | 4 |
| BPADP | 15 | 15 | 15 | 15 | 15 | 13 |
| Vicat B/120 (°C) | 152 | 152 | 150 | 149 | 149 | 157 |
| Tensile modulus | 2601 | 2566 | 2618 | 2639 | 2660 | 2690 |
| Tensile stress at break | 59 | 63 | 59 | 62 | 62 | 64 |
| UL rating | V0 | V0 | V0 | V0 | vo | V0 |
| CTI | 225 | 275 | 275 | 275 | 275 | 275 |

Examples 6-10 and Comparative Example 10 show the effect of tricalcium phosphate on CTI in a composition without reinforcing filler and without black pigment. By including only 3.5 weight percent of tricalcium phosphate the CTI increased by at least 10% while maintaining the other physical properties.

### EXAMPLES 11-13 and COMPARATIVE EXAMPLE 11

Examples 11-13 and Comparative Example show the effect of tricalcium phosphate in compositions comprising pigment black.. Each example contained 1.2 to 1.3 weight percent of low linear density polyethylene as a mold release agent and 0.3 weight percent of stabilizers. Compositions and physical properties are shown in Table 4. Flame testing for these examples was performed at 0.8 millimeter thickness.

**Table 5.**

| | CE 11 | 11 | 12 | 13 |
|---|---|---|---|---|
| PPE I | 79.4 | 77.4 | 75.4 | 79.4 |
| Tricalcium phosphate | - | 2 | 4 | 2 |
| SEBS | 4 | 4 | 4 | 4 |
| Pigment black 7 | 1 | 1 | 1 | 1 |
| BPADP | 15 | 15 | 15 | 13 |
| Vicat B/120 (°C) | 151.7 | 150.1 | 149.95 | 158.05 |
| Tensile modulus | 2581.4 | 2584 | 2642.4 | 2667.6 |
| Tensile stress at break | 63.05 | 59.63 | 61.28 | 59.11 |
| UL rating | V0 | 0 | V0 | V0 |
| CTI | 225 | 275 | 275 | 250 |

Examples 11-13, when compared to Comparative Example 11, shows that the inclusion of tricalcium phosphate increases the CTI by 10 to 20 percent.

The terms "first," "second," and the like, "primary," "secondary," and the like, "(a)," "(b)" and the like, as used herein do not denote any order, quantity, or importance, but rather are used to distinguish one element from another. The endpoints of all ranges directed to the same component or property are inclusive of the endpoint and independently combinable. Reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) may be combined in any suitable manner in the various embodiments.

## Claims

1. A thermoplastic composition comprising:
45 to 65 weight percent of a poly(arylene ether);
10 to 30 weight percent of a poly(alkenyl aromatic) resin;
1 to 8 weight percent of hydroxylapatite;
3 to 15 weight percent of an organophosphate ester flame retardant;
5 to 10 weight percent of titanium dioxide; and
3 to 15 weight percent of a reinforcing filler,
wherein weight percent is based on the total weight of the composition, and
wherein the composition has a CTI of greater than or equal to 350 volts as determined by IEC60112.

2. The composition of Claim 1, wherein the poly(arylene ether) is present in an amount of 50 to 60 weight percent, the poly(alkenyl aromatic) resin is present in an amount of 15 to 25 weight percent, the hydroxylapatite is present in an amount of 2 to 8 weight percent, the titanium dioxide is present in an amount of 6 to 9 weight percent, the organophosphate ester flame retardant is present in an amount of 4 to 13 weight percent, and the reinforcing filler is present in an amount of 4 to 13 weight percent, wherein weight percent is based on the total weight of the composition.

3. The composition of Claim 1 or 2, wherein the hydroxylapatite has an average particle size of 1 to 10 micrometers.

4. The composition of Claim 3, wherein the titanium dioxide has an average particle size of 0.1 to 5.0 micrometers.

5. A thermoplastic composition comprising:
60 to 85 weight percent of a poly(arylene ether);
7 to 35 weight percent of a poly(alkenyl aromatic) resin;
1 to 8 weight percent of hydroxylapatite; and
5 to 15 weight percent of organophosphate ester flame retardant,
wherein weight percent is based on the total weight of the composition, and
wherein the composition has a CTI of greater than or equal to 240 volts as determined by IEC60112.

6. A thermoplastic composition comprising:
60 to 90 weight percent of a poly(arylene ether);
1 to 10 weight percent of a block copolymer;
1 to 8 weight percent of hydroxylapatite; and
5 to 20 weight percent of organophosphate ester flame retardant,
wherein weight percent is based on the total weight of the composition, and
wherein the composition has a CTI of greater than or equal to 240 volts as determined by IEC60112.

7. The composition of Claim 5 or 6, wherein the composition further comprises 0.5 to 2 weight percent of a black coloration compound based on the total weight of the composition.

8. The composition of any of Claims 1, 2, or 5, wherein the poly(alkenyl aromatic) resin comprises high impact polystyrene.

9. The composition of Claim 5, wherein the poly(alkenyl aromatic) resin comprises homopolymer of an alkenyl aromatic monomer and a block copolymer wherein the block copolymer comprises a poly(alkenyl aromatic) block.

10. The composition of any Claims 1, 2, 5, or 6, wherein the hydroxylapatite has an average particle size of 1 to 10 micrometers.

11. The composition of any Claims 1, 2, 5, or 6, wherein the organophosphate ester flame retardant is selected from the group consisting of resorcinol bis-diphenylphosphate, bis-phenol A bis-diphenylphosphate, their polymeric counterparts, and combinations comprising two or more of the foregoing.

12. The composition of either of Claims 5 or 6, wherein the composition is free of glass fiber.

13. The composition of Claim 1 or 6, wherein the composition has a Vicat B 120 value of 145°C to 165°C.

14. The composition of Claim 6 further comprising 1 to 5 weight percent of a poly(alkenyl aromatic) resin different from the block polymer based on the total weight of the composition.

15. An article comprising the composition of any of the preceding claims.

## Patentansprüche

1. Thermoplastische Zusammensetzung umfassend:
45 bis 65 Gewichtsprozent eines Poly(arylenether)s;
10 bis 30 Gewichtsprozent eines Poly(alkenylaromaten)-Harzes;
1 bis 8 Gewichtsprozent Hydroxylapatit;
3 bis 15 Gewichtsprozent eines Organophosphatester-Flammschutzmittels;
5 bis 10 Gewichtsprozent Titandioxid; und
3 bis 15 Gewichtsprozent eines Verstärkerfüllstoffs,
wobei Gewichtsprozent auf das Gesamtgewicht der Zusammensetzung bezogen ist, und
wobei die Zusammensetzung einen CTI von mehr als oder gleich 350 Volt bei Bestimmung nach IEC 60112 aufweist.

2. Zusammensetzung nach Anspruch 1, wobei der Poly(arylenether) in einer Menge von 50 bis 60 Gewichtsprozent vorliegt, das Poly(alkenylaromaten)-Harz in einer Menge von 15 bis 25 Gewichtsprozent vorliegt, der Hydroxylapatit in einer Menge von 2 bis 8 Gewichtsprozent vorliegt, das Titandioxid in einer Menge von 6 bis 9 Gewichtsprozent vorliegt, das Organophosphatester-Flammschutzmittel in einer Menge von 4 bis 13 Gewichtsprozent vorliegt, und der Verstärkerfüllstoff in einer Menge von 4 bis 13 Gewichtsprozent vorliegt, wobei Gewichtsprozent auf das Gesamtgewicht der Zusammensetzung bezogen ist.

3. Zusammensetzung nach Anspruch 1 oder 2, wobei der Hydroxylapatit eine durchschnittliche Teilchengröße von 1 bis 10 Mikrometer aufweist.

4. Zusammensetzung nach Anspruch 3, wobei das Titandioxid eine durchschnittliche Teilchengröße von 0,1 bis 5,0 Mikrometer aufweist.

5. Thermoplastische Zusammensetzung umfassend:
60 bis 85 Gewichtsprozent eines Poly(arylenether)s;
7 bis 35 Gewichtsprozent eines Poly(alkenylaromaten)-Harzes;
1 bis 8 Gewichtsprozent Hydroxylapatit; und
5 bis 15 Gewichtsprozent eines Organophosphatester-Flammschutzmittels,
wobei Gewichtsprozent auf das Gesamtgewicht der Zusammensetzung bezogen ist, und
wobei die Zusammensetzung einen CTI von mehr als oder gleich 240 Volt bei Bestimmung nach IEC 60112 aufweist.

6. Thermoplastische Zusammensetzung umfassend:
60 bis 90 Gewichtsprozent eines Poly(arylenether)s;
1 bis 10 Gewichtsprozent eines Block-Copolymers;
1 bis 8 Gewichtsprozent Hydroxylapatit; und
5 bis 20 Gewichtsprozent eines Organophosphatester-Flammschutzmittels,
wobei Gewichtsprozent auf das Gesamtgewicht der Zusammensetzung bezogen ist, und
wobei die Zusammensetzung einen CTI von mehr als oder gleich 240 Volt bei Bestimmung nach IEC 60112 aufweist.

7. Zusammensetzung nach Anspruch 5 oder 6, wobei die Zusammensetzung weiterhin 0,5 bis 2 Gewichtsprozent einer Schwarzfärbungsverbindung, bezogen auf das Gesamtgewicht der Zusammensetzung, aufweist.

8. Zusammensetzung nach einem der Ansprüche 1, 2 oder 5, wobei das Poly(alkenylaromaten)-Harz hochschlagfestes Polystyrol aufweist.

9. Zusammensetzung nach Anspruch 5, wobei das Poly(alkenylaromaten)-Harz ein Homopolymer eines alkenylaromatischen Monomers und ein Block-Copolymer umfasst, wobei das Block-Copolymer einen Poly-(alkenylaromaten)-Block umfasst.

10. Zusammensetzung nach einem der Ansprüche 1, 2, 5 oder 6, wobei der Hydroxylapatit eine durchschnittliche Teilchengröße von 1 bis 10 Mikrometer aufweist.

11. Zusammensetzung nach einem der Ansprüche 1, 2, 5 oder 6, wobei das Organophosphatester-Flammschutzmittel aus der Gruppe bestehend aus Resorcin-Bis-diphenylphosphat, Bisphenol A-Bis-diphenylphosphat, deren polymeren Gegenstücken, und Kombinationen umfassend zwei oder mehr der vorstehenden ausgewählt ist.

12. Zusammensetzung nach entweder Anspruch 5 oder 6, wobei die Zusammensetzung frei von Glasfaser ist.

13. Zusammensetzung nach Anspruch 1 oder 6, wobei die Zusammensetzung einen Vicat B 120-Wert von 145°C bis 165 °C aufweist.

14. Zusammensetzung nach Anspruch 6, weiterhin umfassend 1 bis 5 Gewichtsprozent eines von dem Block-Polymer verschiedenen, Poly(alkenylaromaten)-Harzes, bezogen auf das Gesamtgewicht der Zusammensetzung.

15. Gegenstand umfassend die Zusammensetzung nach einem der vorhergehenden Ansprüche.

## Revendications

1. Composition thermoplastique comprenant :
45 à 65 % en poids d'un poly(arylène éther) ;
10 à 30 % en poids d'une résine d'un composé poly(alcénylaromatique) ;
1 à 8 % en poids d'hydroxylapatite ;
3 à 15 % en poids d'un retardateur de flamme de type ester organophosphate ;
5 à 10 % en poids de dioxyde de titane ; et
3 à 15 % en poids d'une charge de renfort,
le pourcentage en poids étant rapporté au poids total de la composition, et la composition ayant un IRC supérieur ou égal à 350 volts, tel que déterminé par CEI60112.

2. Composition selon la revendication 1, dans laquelle le poly(arylène éther) est présent en une quantité de 50 à 60 % en poids, la résine d'un composé poly(alcénylaromatique) est présente en une quantité de 15 à 25 % en poids, l'hydroxylapatite est présente en une quantité de 2 à 8 % en poids, le dioxyde de titane est présent en une quantité de 6 à 9 % en poids, le retardateur de flamme de type ester organophosphate est présent en une quantité de 4 à 13 % en poids, et la charge de renfort est présente en une quantité de 4 à 13 % en poids, le pourcentage en poids étant rapporté au poids total de la composition.

3. Composition selon la revendication 1 ou 2, dans laquelle l'hydroxylapatite a une granulométrie moyenne de 1 à 10 micromètres.

4. Composition selon la revendication 3, dans laquelle le dioxyde de titane a une granulométrie moyenne de 0,1 à 5,0 micromètres.

5. Composition thermoplastique comprenant :
60 à 85 % en poids d'un poly(arylène éther) ;
7 à 35 % en poids d'une résine d'un composé poly(alcénylaromatique) ;
1 à 8 % en poids d'hydroxylapatite ; et
5 à 15 % en poids d'un retardateur de flamme de type ester organophosphate,
le pourcentage en poids étant rapporté au poids total de la composition, et la composition ayant un IRC supérieur ou égal à 240 volts, tel que déterminé par CEI60112.

6. Composition thermoplastique comprenant :
60 à 90 % en poids d'un poly(arylène éther) ;
1 à 10 % en poids d'une résine d'un composé poly(alcénylaromatique) ;
1 à 8 % en poids d'hydroxylapatite ; et
5 à 20 % en poids d'un retardateur de flamme de type ester organophosphate,
le pourcentage en poids étant rapporté au poids total de la composition, et la composition ayant un IRC supérieur ou égal à 240 volts, tel que déterminé par CEI60112.

7. Composition selon la revendication 5 ou 6, la composition comprenant en outre 0,5 à 2 % en poids d'un composé colorant noir, par rapport au poids total de la composition.

8. Composition selon l'une quelconque des revendications 1, 2 ou 5, dans laquelle la résine d'un composé poly(alcénylaromatique) comprend un polystyrène à grande résistance au choc.

9. Composition selon la revendication 5, dans laquelle la résine d'un composé poly(alcénylaromatique) comprend un homopolymère d'un monomère alcénylaromatique et un copolymère à blocs, le copolymère à blocs comprenant un bloc poly(alcénylaromatique).

10. Composition selon l'une quelconque des revendications 1, 2, 5 ou 6, dans laquelle l'hydroxylapatite a une granulométrie moyenne de 1 à 10 micromètres.

11. Composition selon l'une quelconque des revendications 1, 2, 5 ou 6, dans laquelle le retardateur de flamme de type ester organophosphate est choisi dans le groupe consistant en le bis-diphénylphosphate de résorcinol, le bis-diphénylphosphate de bisphénol A, leurs contreparties polymères, et les combinaisons comprenant au moins deux des composés précédents.

12. Composition selon l'une ou l'autre des revendications 5 ou 6, la composition ne contenant pas de fibres de verre.

13. Composition selon la revendication 1 ou 6, la composition ayant une valeur Vicat B 120 de 145 à 165°C.

14. Composition selon la revendication 6, comprenant en outre 1 à 5 % en poids d'une résine d'un composé poly(alcénylaromatique) différente du polymère à bloc, par rapport au poids total de la composition.

15. Objet comprenant la composition selon l'une quelconque des revendications précédentes.
